# EUROPÄISCHE PATENTSCHRIFT

(11) **EP 4 381 714 B1**
(45) Veröffentlichungstag und Bekanntmachung des Hinweises auf die Patenterteilung: **04.06.2025**
(21) Anmeldenummer: 22772914.2
(22) Anmeldetag: 01.09.2022
(51) Int. Cl.: H04L 47/74, H04L 47/78, H04L 47/722, H04L 47/2416, H04L 47/28, H04L 47/62, H04L 47/70

(54) **VERFAHREN ZUR ÜBERMITTLUNG ZEITKRITISCHER DATEN INNERHALB EINES KOMMUNIKATIONSSYSTEMS UND KOMMUNIKATIONSSTEUERUNGSEINRICHTUNG**
METHOD FOR TRANSMITTING TIME-CRITICAL DATA WITHIN A COMMUNICATION SYSTEM AND COMMUNICATION DEVICE
PROCÉDÉ DE TRANSMISSION DES DONNÉES TEMPORELLES DANS UN SYSTÈME DE COMMUNICATION ET DISPOSITIF DE COMMANDE DE COMMUNICATION

(30) Priorität: 28.09.2021 EP 21199388
(43) Veröffentlichungstag der Anmeldung: 12.06.2024
(73) Patentinhaber: Siemens Aktiengesellschaft, 80333 München (DE)
(72) Erfinder: HÖME, Stephan, 91126 Schwabach (DE); KERSCHBAUM, Sven, 90768 Fürth (DE)
(74) Vertreter: Siemens Patent Attorneys
(86) Internationale Anmeldenummer: PCT/EP2022/074334
(87) Internationale Veröffentlichungsnummer: WO 2023/052028

(56) Entgegenhaltungen:
- US-A1- 2006 092 963
- US-A1- 2012 002 541
- AHMED NASRALLAH ET AL: "Reconfiguration Algorithms for High Precision Communications in Time Sensitive Networks: Time-Aware Shaper Configuration with IEEE 802.1Qcc (Extended Version)", ARXIV.ORG, CORNELL UNIVERSITY LIBRARY, 201 OLIN LIBRARY CORNELL UNIVERSITY ITHACA, NY 14853, 27 June 2019 (2019-06-27), XP081384950

## Beschreibung

Die vorliegende Erfindung betrifft ein Verfahren zur Übermittlung zeitkritischer Daten, insbesondere Steuerungsdaten in einem industriellen Automatisierungssystem, innerhalb eines Kommunikationssystems sowie eine Kommunikationssteuerungseinrichtung, die zur Durchführung des Verfahrens vorgesehen ist.

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

Entsprechend EP 3 038 325 A1 werden zur Datenübermittlung in einem Kommunikationsnetz eines industriellen Automatisierungssystems erste Datenrahmen, die Steuerungsdaten für das Automatisierungssystem umfassen, durch Koppel-Kommunikationsgeräte des Kommunikationsnetzes nur innerhalb periodischer erster Zeitintervalle übermittelt. Zweite Datenrahmen, die Sequenzen von Datenrahmen umfassenden Datenströmen zugeordnet sind, bzw. dritte Datenrahmen, für deren Übermittlung keine oder eine unter einem vorgegebenen Schwellwert liegende Dienstgüte festgelegt ist, werden innerhalb periodischer zweiter Zeitintervalle übermittelt. Die ersten Zeitintervalle sind in erste und zweite Teilintervall unterteilt. Weiterzuleitende erste Datenrahmen werden Teilintervall-alternierend in eine erste bzw. zweite Warteschlange eingefügt und alternierend aus den Warteschlangen für eine Weiterleitung entnommen.

In WO 2019/001718 A1 ist ein Verfahren zur Datenübermittlung beschrieben, das eine Kombination von geschützter Kommunikation und geringem Netzwerk-Konfigurationsaufwand ermöglicht. Dabei werden bei einer Reservierung von Ressourcen zur Übermittlung von Datenströmen (Streams) von einem Sender zu einem Empfänger zumindest zwei zumindest abschnittsweise redundante Pfade reserviert. Durch Erweiterung eines Reservierungsprotokolls wird eine automatische Konfiguration von Duplikatefiltern an redundanten Pfadabschnitten zugeordneten Netzknoten während einer Ressourcenreservierung vorgenommen.

Aus WO 2020/114706 A1 ist ein Kommunikationssystem zur Übermittlung zeitkritischer Daten bekannt, bei dem ausgewählte Datagramme Datenströmen zugeordnet und über Pfade für die Datenströme übermittelt werden. Reservierungsanfragen, die jeweils zumindest Angaben zu einem ersten und zweiten Netzknoten und Dienstgüteparameter umfassen, werden zur Reservierung von durch Kommunikationsgeräte für eine Übertragung von Datenströmen bereitzustellenden Ressourcen jeweils durch eine Reservierungsfunktionskomponente, die einem ersten oder zweiten Kommunikationsendgerät oder einem mit diesem verbundenen Datagramme weiterleitenden Kommunikationsgerät zugeordnet ist, an eine übergeordnete Kommunikationssteuerungseinrichtung übermittelt. Die übergeordnete Kommunikationssteuerungseinrichtung ermittelt bei Reservierungsanfragen jeweils einen Pfad und überprüft, ob in Kommunikationsgeräten entlang des jeweiligen Pfades ausreichende Ressourcen für die Übertragung der Datenströme unter Einhaltung der spezifizierten Dienstgüteparameter verfügbar sind, und ermittelt für ausgewählte Kommunikationsgeräte eine vorgeschlagene lokale Zyklusdauer.

In "Reconfiguration Algorithms for High Precision Communications in Time Sensitive Networks: Time-Aware Shaper Configuration with IEEE 802.10cc (Extended Version)" (ARXIV.ORG, CORNELL UNIVERSITY LIBRARY, 201 OLIN LIBRARY CORNELL UNIVERSITY ITHACA, NY 14853, 27. Juni, 2019 (2019-06-27)) ist ein Verfahren zur Übermittlung zeitkritischer Daten innerhalb eines Kommunikationssystems beschrieben. Dabei werden ausgewählte Datagramme Datenströmen zugeordnet und von ersten Kommunikationsgeräten zu zweiten Kommunikationsgeräten über dritte Kommunikationsgeräte umfassende Pfade übermittelt. Eine übergeordnete Kommunikationssteuerungseinrichtung ermittelt jeweils einen Pfad für den jeweiligen Datenstrom und reserviert bei ausreichender Verfügbarkeit Ressourcen zur Übermittlung des jeweiligen Datenstroms über die dritten Kommunikationsgeräte. Bei Verfügbarkeit ausreichender Ressourcen konfiguriert die übergeordnete Kommunikationssteuerungseinrichtung zumindest mit einem ersten oder zweiten Kommunikationsgerät verbundene dritte Kommunikationsgeräte jeweils dafür, dass Datenströmen zugeordnete Datagramme jeweils in für Datenströme reservierte Sende-Queues eingereiht werden.

US 2006/092963 A1 betrifft ein Verfahren zur Kommunikation innerhalb eines Netzwerks, bei dem zunächst ein Profil für einen Datenfluss in einem drahtlosen Netzwerk-Client mit einer zugesicherten Quality of Service (QoS) erzeugt wird. Bei Empfang des Profils wird ein Konfigurationsparameter zur QoS-Erzielung für den Datenfluss erstellt. Entsprechend diesem Konfigurationsparameter wird eine Schicht eines Datenpfads konfiguriert, der dem Datenfluss zugeordnet ist. Bei mangelnder Verfügbarkeit ausreichender Ressourcen erfolgt eine Behandlung als Best-effort Datenverkehr.

Auch bei einem zentralen Stream-Reservierungsmodell werden Stream-Reservierungsanfragen grundsätzlich unabhängig voneinander an einen zentralen Netzwerk-Controller CNC bzw. an eine übergeordnete Kommunikationssteuerungseinrichtung übermittelt. Nach Empfang einer Stream-Reservierungsanfrage plant der zentrale Netzwerk-Controller Reservierungswünsche unmittelbar ein, sofern im jeweiligen Kommunikationssystem ausreichende Ressourcen verfügbar sind. Dies wird üblicherweise als inkrementelles Scheduling bezeichnet. Dies kann nun dazu führen, dass der zentrale Netzwerk-Controller eine Stream-Reservierungsanfrage für einen an und für sich hoch priorisierten Prozess, insbesondere einen zeitkritischen Steuerungsprozess in einem industriellen Automatisierungssystem, ablehnen muss, wenn beispielsweise nach einer Reservierung von System-Ressourcen für eine zeitunkritischere Anwendung, z.B. eine Datenanalyse-Anwendung, nicht mehr ausreichend System-Ressourcen vorhanden sind.

Der vorliegenden Erfindung liegt die Aufgabe zugrunde, ein Verfahren zur Übermittlung zeitkritischer Daten innerhalb eines Kommunikationssystems zu schaffen, das eine effiziente Ressourcenreservierung und zuverlässige Einrichtung von Datenströmen zur Übermittlung hochpriorisierter Daten ermöglicht, und geeignete Vorrichtung zur Durchführung des Verfahrens anzugeben.

Diese Aufgabe wird erfindungsgemäß durch ein Verfahren mit den in Anspruch 1 angegebenen Merkmalen und durch eine Kommunikationssteuerungseinrichtung mit den in Anspruch 14 angegebenen Merkmalen gelöst. Vorteilhafte Weiterbildungen sind in den abhängigen Ansprüchen angegeben.

Entsprechend dem erfindungsgemäßen Verfahren zur Übermittlung zeitkritischer Daten innerhalb eines Kommunikationssystems werden ausgewählte Datagramme Datenströmen zugeordnet und von ersten Kommunikationsgeräten zu zweiten Kommunikationsgeräten über dritte Kommunikationsgeräte umfassende Pfade übermittelt. Die ersten Kommunikationsgeräte senden zur Bekanntmachung abonnierbarer Datenströme jeweils einen Datenstrom-Identifikator umfassende erste Datagramme und spezifizieren in den ersten Datagrammen Dienstgüteparameter für den jeweiligen Datenstrom. Demgegenüber senden die zweiten Kommunikationsgeräte zur Reservierung von durch die dritten Kommunikationsgeräte für eine Übermittlung der Datenströme bereitzustellenden Ressourcen jeweils zweite Datagramme und spezifizieren in diesen den jeweiligen Datenstrom-Identifikator. Auf die ersten und zweiten Datagramme ermittelt eine übergeordnete Kommunikationssteuerungseinrichtung, insbesondere ein Central Network Controller, jeweils einen Pfad für den jeweiligen Datenstrom und reserviert bei ausreichender Verfügbarkeit Ressourcen zur Übermittlung des jeweiligen Datenstroms über die dritten Kommunikationsgeräte.

Die durch insbesondere die dritten Kommunikationsgeräte bereitzustellenden Ressourcen umfassen beispielsweise nutzbare Übertragungszeitfenster, Bandbreite, zugesicherte maximale Latenz, Queue-Anzahl, Queue-Cache bzw. Adress-Cache in Switches oder Bridges. Die Datenstrom-Identifikatoren werden vorzugsweise jeweils auf eine Reservierungsanfrage eines ersten Kommunikationsgeräts durch die übergeordnete Kommunikationssteuerungseinrichtung an das jeweilige erste Kommunikationsgerät bereitgestellt. Darüber hinaus werden die Datenströme für eine Sende-Queue-Zuordnung ihrer Datagramme erfindungsgemäß jeweils durch ihren Datenstrom-Identifikator und ihre Zuordnung zu einem virtuellen lokalen Netz identifiziert, insbesondere entsprechend IEEE 802.1 CB.

Bei Verfügbarkeit ausreichender Ressourcen konfiguriert die übergeordnete Kommunikationssteuerungseinrichtung zumindest mit einem ersten oder zweiten Kommunikationsgerät verbundene dritte Kommunikationsgeräte erfindungsgemäß jeweils dafür, dass Datenströmen zugeordnete Datagramme jeweils in für Datenströme reservierte Sende-Queues eingereiht werden. Demgegenüber konfiguriert die übergeordnete Kommunikationssteuerungseinrichtung bei mangelnder oder unsicherer Verfügbarkeit ausreichender Ressourcen zumindest die mit einem ersten oder zweiten Kommunikationsgerät verbundenen dritten Kommunikationsgeräte jeweils zumindest temporär dafür, dass ausgewählten Datenströmen zugeordnete Datagramme jeweils in eine Sende-Queue für Datenverkehr eingereiht werden, der ohne spezifische Dienstgüte-Zusicherung behandelt wird. Vorteilhafterweise konfiguriert die übergeordnete Kommunikationssteuerungseinrichtung zumindest die mit einem ersten oder zweiten Kommunikationsgerät verbundenen dritten Kommunikationsgeräte jeweils durch Einträge in eine jeweilige Forwarding Database dafür, welches virtuelle lokale Netz einem Datenstrom jeweils zugeordnet wird bzw. ob bzw. mit welcher Priorität einem Datenstrom zugeordnete Datagramme jeweils in eine für Datenströme reservierte Sende-Queue eingereiht werden.

Insgesamt ermöglicht die vorliegende Erfindung, dass eine Reservierung von Ressourcen für Streams, deren Anwendungen oder zugeordnete Prozesse niedriger priorisiert sind als Anwendungen oder Prozesse, für die später Ressourcen reserviert werden sollen, vermieden wird, so dass für hoch priorisierte Anwendungen oder Prozesse eine Reservierung von Ressourcen für Streams sichergestellt werden kann. Dies ist insbesondere für eine dynamische Allokation von Ressourcen für Streams während eines Bootstrapping-Vorgangs relevant, bei dem eine Reihenfolge eines Eintreffens von Reservierungsanfragen mitunter schwer vorhersagbar ist. Somit ist es mit der vorliegenden Erfindung ausreichend, dass auf Stream-Reservierungsanfragen zunächst nur eine jeweilige Stream-ID im Kommunikationssystem bekannt gegeben, ohne dass unmittelbar Ressourcen reserviert werden. Dies kann erfindungsgemäß zu einem späteren Zeitpunkt erfolgen, wenn beispielsweise eine Übersicht sämtlicher zu berücksichtigenden Reservierungsanfragen vorliegt.

Entsprechend einer besonders bevorzugten Ausgestaltung der vorliegenden Erfindung konfiguriert die übergeordnete Kommunikationssteuerungseinrichtung bei Verfügbarkeit ausreichender Ressourcen zumindest mit einem ersten oder zweiten Kommunikationsgerät verbundene dritte Kommunikationsgeräte jeweils dafür, dass die Datenströme jeweils einem virtuellen lokalen Netz zugeordnet und Datenströmen zugeordnete Datagramme auf Basis dieser Zuordnung jeweils in die jeweilige für Datenströme reservierte Sende-Queues eingereiht werden. Bei mangelnder oder unsicherer Verfügbarkeit ausreichender Ressourcen konfiguriert die übergeordnete Kommunikationssteuerungseinrichtung zumindest die mit einem ersten oder zweiten Kommunikationsgerät verbundenen dritten Kommunikationsgeräte dagegen vorteilhafterweise jeweils zumindest temporär dafür, dass ausgewählte Datenströme jeweils einem virtuellen lokalen Netz zugeordnet werden, anhand dessen Zuordnung dem jeweiligen ausgewählten Datenstrom zugeordnete Datagramme jeweils in die jeweilige Sende-Queue für Datenverkehr eingereiht werden, der ohne spezifische Dienstgüte-Zusicherung behandelt wird. Damit kann durch die Zuordnung des virtuellen lokalen Netzes geändert werden, ob bzw. mit welcher Priorität einem Datenstrom zugeordnete Datagramme jeweils in eine für Datenströme reservierte Sende-Queue eingereiht werden. Daher ist es auf einfache Weise möglich, Stream-Reservierungsanfragen durch ein Umschreiben von VLAN-Prioritätswerten in Edge Bridges oder Switches je nach Netzauslastung dynamisch rauf- bzw. runterzupriorisieren.

Vorzugsweise erstellt die übergeordnete Kommunikationssteuerungseinrichtung während eines laufenden Betriebs des Kommunikationssystems zeit- bzw. ereignisgesteuert eine aktualisierte Priorisierung sämtlicher Datenströme und ermittelt anhand der aktualisierten Priorisierung sowie auf Basis aktuell verfügbarer Ressourcen, welche Datenströme zumindest temporär als ausgewählte Datenströme zu behandeln sind. Insbesondere kann die übergeordnete Kommunikationssteuerungseinrichtung zumindest die mit einem ersten oder zweiten Kommunikationsgerät verbundenen dritten Kommunikationsgeräte während eines Betriebsstarts des Kommunikationssystems jeweils dafür konfigurieren, dass zunächst sämtliche Datenströme jeweils einem virtuellen lokalen Netz zugeordnet werden, anhand dessen Zuordnung dem jeweiligen ausgewählten Datenstrom zugeordnete Datagramme jeweils in die jeweilige Sende-Queue für Datenverkehr eingereiht werden, der ohne spezifische Dienstgüte-Zusicherung behandelt wird. Vorteilhafterweise erstellt die übergeordnete Kommunikationssteuerungseinrichtung nach dem Betriebsstart eine Priorisierung sämtlicher Datenströme und ermittelt anhand der Priorisierung sowie auf Basis verfügbarer Ressourcen, welche Datenströme zumindest temporär als ausgewählte Datenströme zu behandeln sind. Auf diese Weise wird zumindest für hoch priorisierte Steuerungsanwendungen oder -prozesse eine zuverlässige Reservierung von Ressourcen zur Übermittlung diesen Steuerungsanwendungen oder -prozessen zugeordneter Streams sichergestellt.

Entsprechend einer besonders bevorzugten Ausgestaltung der vorliegenden Erfindung sind die Kommunikationsgeräte über ein Time-sensitive Network, insbesondere entsprechend IEEE802.3-2018, IEEE 802.1Q-2018, IEEE 802.1AB-2016, IEEE 802.1AS-2011, IEEE 802.1BA-2011 und/oder IEEE 802.1CB-2017, miteinander verbunden. Dabei wird eine Weiterleitung der ausgewählten Datagramme vorteilhafterweise mittels Frame Preemption, insbesondere gemäß IEEE 802.1Q-2018, Time-Aware Shaper, insbesondere gemäß IEEE 802.1Q-2018, Credit-Based Shaper, insbesondere gemäß IEEE 802.1Q-2018, Burst Limiting Shaper, Peristaltic Shaper und/oder Priority-Based Shaper gesteuert.

Darüber hinaus sind in den dritten Kommunikationsgeräten vorzugsweise jeweils zumindest für erste Datenströme mit erhöhten Echtzeitanforderungen reservierte Sende-Queues, für zweite Datenströme ohne erhöhte Echtzeitanforderungen reservierte Sende-Queues und Sende-Queues für Datenverkehr ohne spezifische Dienstgüte-Zusicherung, insbesondere Best-effort Datenverkehr, vorgesehen. Dabei reserviert die übergeordnete Kommunikationssteuerungseinrichtung zunächst nur für die ersten Datenströme bei ausreichender Verfügbarkeit Ressourcen zur Übermittlung des jeweiligen Datenstroms über die dritten Kommunikationsgeräte und konfiguriert die dritten Kommunikationsgeräte jeweils dafür, die zweiten Datenströme zumindest temporär als ausgewählte Datenströme, also als Best-effort Datenverkehr, zu behandeln. Vorteilhafterweise überprüft die übergeordnete Kommunikationssteuerungseinrichtung bei Verfügbarkeit ausreichender Ressourcen zur Übermittlung der ersten Datenströme über die dritten Kommunikationsgeräte, ob zur Übermittlung der zweiten Datenströme ausreichende Ressourcen verfügbar sind. Dementsprechend werden die dritten Kommunikationsgeräte jeweils dafür konfiguriert, die den zweiten Datenströmen zugeordnete Datagramme in die für die zweiten Datenströme reservierten Sende-Queues einzureihen. Somit wird eine Reservierung von Ressourcen zur Übermittlung von Datenströmen sukzessive entsprechend einer jeweils zugeordneten Datenverkehrsklasse sichergestellt.

Die erfindungsgemäße Kommunikationssteuerungseinrichtung ist zur Durchführung eines Verfahrens entsprechend vorangehenden Ausführungen vorgesehen und umfasst zumindest einen Anschluss zur Verbindung mit einem Datagramme weiterleitenden Kommunikationsgerät. Die Kommunikationssteuerungseinrichtung ist dafür ausgestaltet und eingerichtet, auf durch erste Kommunikationsgeräte gesendete erste Datagramme zur Bekanntmachung abonnierbarer Datenströme und auf durch zweite Kommunikationsgeräte gesendete zweite Datagramme zur Reservierung von durch dritte Kommunikationsgeräte für eine Übermittlung der Datenströme bereitzustellenden Ressourcen jeweils einen Pfad für den jeweiligen Datenstrom zu ermitteln und bei ausreichender Verfügbarkeit Ressourcen zur Übermittlung des jeweiligen Datenstroms über die dritten Kommunikationsgeräte zu reservieren.

Ferner ist die erfindungsgemäße Kommunikationssteuerungseinrichtung dafür ausgestaltet und eingerichtet, bei Verfügbarkeit ausreichender Ressourcen zumindest mit einem ersten oder zweiten Kommunikationsgerät verbundene dritte Kommunikationsgeräte jeweils dafür zu konfigurieren, dass Datenströmen zugeordnete Datagramme jeweils in für Datenströme reservierte Sende-Queues eingereiht werden. Die Kommunikationssteuerungseinrichtung ist auch dafür ausgestaltet und eingerichtet, die dritten Kommunikationsgeräte zu konfigurieren, dass die Datenströme für eine Sende-Queue-Zuordnung ihrer Datagramme jeweils durch ihren Datenstrom-Identifikator und ihre Zuordnung zu einem virtuellen lokalen Netz identifiziert werden. Außerdem ist die Kommunikationssteuerungseinrichtung dafür ausgestaltet und eingerichtet, bei mangelnder oder unsicherer Verfügbarkeit ausreichender Ressourcen zumindest die mit einem ersten oder zweiten Kommunikationsgerät verbundenen dritten Kommunikationsgeräte jeweils zumindest temporär dafür zu konfigurieren, dass ausgewählten Datenströmen zugeordnete Datagramme jeweils in eine Sende-Queue für Datenverkehr eingereiht werden, der ohne spezifische Dienstgüte-Zusicherung behandelt wird.

Die vorliegende Erfindung wird nachfolgend an einem Ausführungsbeispiel anhand der Zeichnung näher erläutert. Es zeigt
- Figur 1: ein mehrere Kommunikationsgeräte umfassendes Kommunikationssystem für ein industrielles Automatisierungssystem,
- Figur 2: ein Ablaufdiagramm für eine Reservierung von Ressourcen zur Übermittlung von Datenströmen innerhalb des Kommunikationssystems gemäß Figur 1.

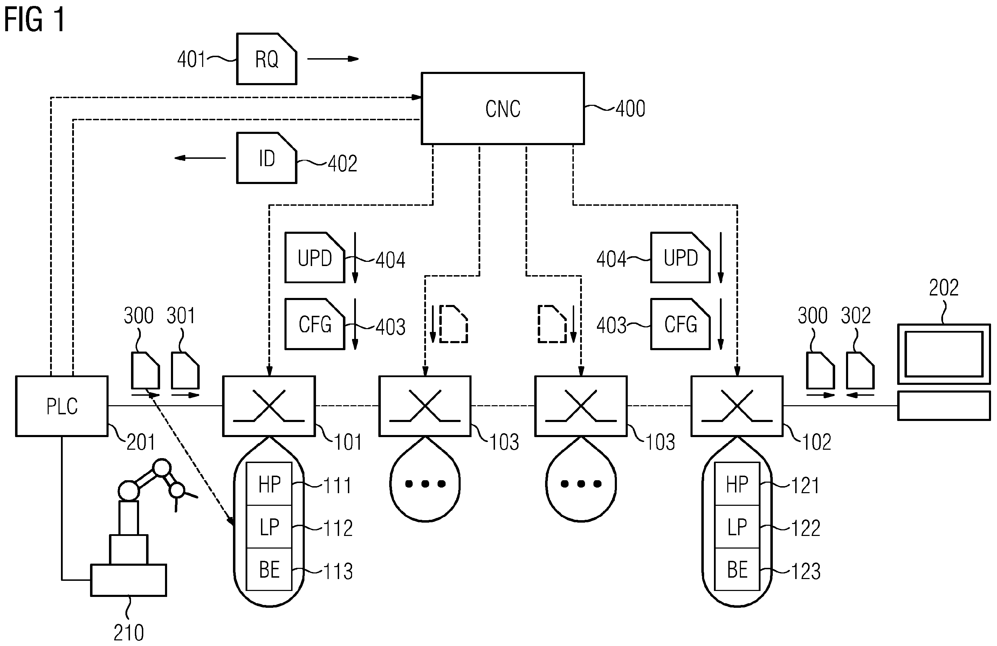

Das in Figur 1 dargestellte Kommunikationssystem für ein industrielles Automatisierungssystem weist mehrere Bridges oder Switches 101-103 als Datagramme weiterleitende Kommunikationsgeräte und eine diesen zugeordnete übergeordnete Steuerungseinrichtung bzw. einen zentralen Netzwerk-Controller (Central Network Controller) 400 auf. Die Bridges bzw. Switches 101-103 umfassen jeweils mehrere Ports sowie einen Backplane-Switch als Koppelelement und dienen insbesondere zum Anschluss von speicherprogrammierbaren Steuerungen 201, Bedien- und Beobachtungsstationen 202, I/O-Controllern oder I/O-Modulen, die ebenfalls Kommunikationsgeräte bzw. Kommunikationsendgeräte darstellen. Im vorliegenden Ausführungsbeispiel ist das Kommunikationssystem als Time-Sensitive Network ausgestaltet, insbesondere entsprechend IEEE802.3-2018, IEEE 802.1Q-2018, IEEE 802.1AB-2016, IEEE 802.1AS-2011, IEEE 802.1BA-2011 bzw. IEEE 802.1CB-2017. Eine Weiterleitung von Datenrahmen (Frames) innerhalb des Kommunikationssystems kann beispielsweise mittels Frame Preemption gemäß IEEE 802.1Q-2018, Time-Aware Shaper gemäß IEEE 802.1Q-2018, Credit-Based Shaper gemäß IEEE 802.1Q-2018, Burst Limiting Shaper, Peristaltic Shaper bzw. Priority-Based Shaper gesteuert werden.

Speicherprogrammierbare Steuerungen 201 umfassen typischerweise jeweils ein Kommunikationsmodul, eine Zentraleinheit sowie zumindest eine Eingabe/Ausgabe-Einheit. Eingabe/Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul kann eine speicherprogrammierbare Steuerung 201 mit einem Switch oder Router oder zusätzlich mit einem Feldbus verbunden werden. Die Eingabe/Ausgabe-Einheit dient einem Austausch von Steuerungs- und Messgrößen zwischen der speicherprogrammierbaren Steuerung 201 und einer durch die speicherprogrammierbare Steuerung 201 gesteuerten Maschine oder Vorrichtung 210. Die Zentraleinheit ist insbesondere für eine Ermittlung geeigneter Steuerungsgrößen aus erfassten Messgrößen vorgesehen. Obige Komponenten der speicherprogrammierbaren Steuerung 201 sind beispielsweise über ein Rückwandbus-System miteinander verbunden.

Zum Austausch von Steuerungs- und Messgrößen mit angeschlossenen Maschinen oder Vorrichtungen können grundsätzlich auch I/O-Module vorgesehen sein. Eine Steuerung von I/O-Modulen kann insbesondere mittels eines I/O-Controllers pro Automatisierungszelle erfolgen. Alternativ hierzu können I/O-Module auch durch eine entfernte speicherprogrammierbare Steuerung angesteuert werden.

Eine Bedien- und Beobachtungsstation 202 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 202 zur Anzeige von Werten eines Regelungskreises und zur Veränderung von Regelungsparametern verwendet. Bedien- und Beobachtungsstationen 202 umfassen zumindest eine graphische Benutzerschnittstelle, ein Eingabegerät, eine Prozessoreinheit und ein Kommunikationsmodul.

Mittels erster Kommunikations- bzw. Automatisierungsgeräte, die insbesondere eine Talker- oder Provider Funktion haben, werden Informationen bzw. Dienste über Datenströme zur Nutzung an zweiten Kommunikations- bzw. Automatisierungsgeräten bereitgestellt, die insbesondere eine Listener- oder Consumer-Funktion haben. Einem Automatisierungsgerät kann gleichzeitig sowohl eine oder mehrere Talker-Funktionen als auch eine oder mehrere Listener-Funktionen haben, beispielsweise wenn es einerseits Automatisierungsdienste bereitstellt und andererseits Automatisierungsdienste anderer Geräte nutzt.

Die speicherprogrammierbare Steuerung 201 kann beispielsweise Messwerte liefern und somit eine Talker-Funktion haben. Dagegen kann die Bedien- und Beobachtungsstation 202 eine Listener-Funktion aufweisen und insbesondere durch die speicherprogrammierbare Steuerung 201 bereitgestellte Informationen empfangen. Grundsätzlich könnte die Bedien- und Beobachtungsstation 202 von der speicherprogrammierbaren Steuerung 201 empfangene Informationen analysieren und hieraus Steuerungsparameter für die speicherprogrammierbare Steuerung 201 vorgeben. Somit können sowohl die speicherprogrammierbare Steuerung 201 als auch die Bedien- und Beobachtungsstation 202 beide Funktionen wahrnehmen. Daher werden Datenströme auf Reservierungsanfragen vorzugsweise jeweils bidirektional eingerichtet.

Zur Übermittlung zeitkritischer Daten werden zumindest ausgewählte Datenrahmen (Frames) 300 Datenströmen zugeordnet und zwischen ersten Kommunikationsgeräten 201 mit Talker-Funktion und zweiten Kommunikationsgeräten 202 mit Listener-Funktion über die Bridges bzw. Switches 101-103 umfassende Pfade übermittelt. Im vorliegenden Ausführungsbeispiel stellt die speicherprogrammierbare Steuerung 201 ein erstes Kommunikationsgerät mit Talker-Funktion dar, während die Bedien- und Beobachtungsstation 202 ein zweites Kommunikationsgerät mit Listener Funktion darstellt. Die Bridges bzw. Switches 101-103 stellen Datagramme weiterleitende dritte Kommunikationsgeräte dar.

Erste Kommunikationsgeräte, wie die speicherprogrammierbare Steuerung 201, senden zur Bekanntmachung abonnierbarer Datenströme jeweils einen Datenstrom-Identifikator umfassende erste Datagramme 301 senden und spezifizieren in den ersten Datagrammen 301 Dienstgüteparameter für den jeweiligen Datenstrom. Der Datenstrom-Identifikator wird dem jeweiligen ersten Kommunikationsgerät auf eine an einen zentralen Netzwerk-Controller 400 gerichtete Stream-Reservierungsanfrage 401 mittels einer Nachricht 402 mitgeteilt, die den Datenstrom-Identifikator umfasst.

Zweite Kommunikationsgeräte, wie die Bedien- und Beobachtungsstation 202, senden zur Reservierung von durch die Bridges bzw. Switches 101-103 für eine Übermittlung der Datenströme bereitzustellenden Ressourcen jeweils zweite Datagramme 302 und spezifizieren in diesen den jeweiligen Datenstrom-Identifikator. Die durch die Bridges bzw. Switches 101-103 bereitzustellenden Ressourcen umfassen insbesondere nutzbare Übertragungszeitfenster, Bandbreite, zugesicherte maximale Latenz, Queue-Anzahl, Queue-Cache bzw. Adress-Cache.

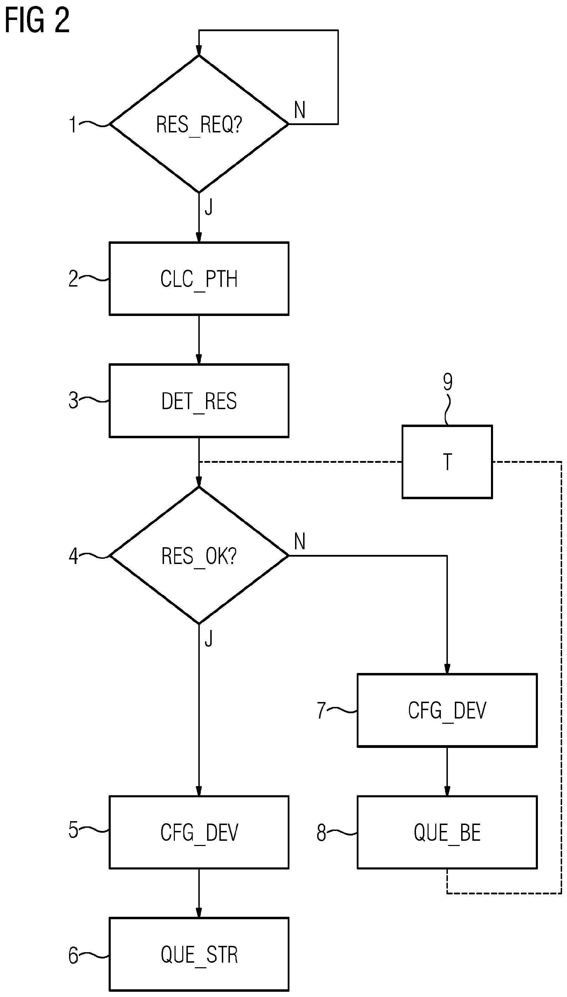

Entsprechend Schritt 1 des in Figur 2 dargestellten Ablaufdiagramms überprüft der zentrale Netzwerk-Controller 400 fortlaufend, ob basierend auf vorliegenden ersten 301 und zweiten Datagrammen 302 Reservierungsforderungen zu erfüllen sind. Bei Reservierungsforderungen ermittelt der zentrale Netzwerk-Controller 400 auf die ersten 301 und zweiten Datagramme 302 jeweils einen Pfad für den jeweiligen Datenstrom (Schritt 2). Außerdem ermittelt der der zentrale Netzwerk-Controller 400 entsprechend Schritt 3 erforderliche Ressourcen zur Übermittlung des jeweiligen Datenstroms über die Bridges bzw. Switches 101-103. Anschließend überprüft der zentrale Netzwerk-Controller 400, ob ausreichende Ressourcen zur Übermittlung des jeweiligen Datenstroms über die Bridges bzw. Switches 101-103 verfügbar sind (Schritt 4). Ist dies der Fall, reserviert zentrale Netzwerk-Controller 400 die erforderlichen Ressourcen.

Insbesondere konfiguriert der zentrale Netzwerk-Controller 400 bei Verfügbarkeit ausreichender Ressourcen zumindest den mit der speicherprogrammierbaren Steuerung 201 verbundenen Switch 101 und den mit der Bedien- und Beobachtungsstation 202 verbundenen Switch 102 jeweils dafür (Schritt 5), dass Datenströmen zugeordnete Datenrahmen 300 jeweils in für Datenströme reservierte Sende-Queues 111-112, 121-122 der Switches 101, 102 eingereiht werden (Schritt 6). Hierzu übermittelt der zentrale Netzwerk-Controller 400 Nachrichten 403 mit entsprechenden Konfigurationsdaten an die Switches 101, 102. In entsprechender Weise können auch die übrigen Switches 103 entlang des jeweils ermittelten Pfads konfiguriert werden.

Bei mangelnder oder unsicherer Verfügbarkeit ausreichender Ressourcen konfiguriert der zentrale Netzwerk-Controller 400 zumindest den mit der speicherprogrammierbaren Steuerung 201 verbundenen Switch 101 und den mit der Bedien- und Beobachtungsstation 202 verbundenen Switch 102 jeweils dafür (Schritt 7), dass ausgewählten Datenströmen zugeordnete Datenrahmen 300 jeweils in eine Sende-Queue 113, 123 für Datenverkehr eingereiht werden (Schritt 8), der ohne spezifische Dienstgüte-Zusicherung behandelt wird. Diese Sende-Queue-Zuordnung für die den ausgewählten Datenströmen zugeordneten Datenrahmen kann entsprechend Schritt 9 nach Ablauf einer definierten Zeitdauer bzw. ereignisbasiert geändert werden, insbesondere wenn wieder ausreichende Ressourcen verfügbar sind.

Im vorliegenden Ausführungsbeispiel sind in den Switches 101-103 jeweils zumindest für erste Datenströme mit erhöhten Echtzeitanforderungen reservierte Sende-Queues 111, 121, für zweite Datenströme ohne erhöhte Echtzeitanforderungen reservierte Sende-Queues 112, 122 und Sende-Queues 113, 123 für Best-effort Datenverkehr vorgesehen. Vorzugsweise reserviert der zentrale Netzwerk-Controller 400 - beispielsweise bei einem Systemstart - zunächst nur für die ersten Datenströme bei ausreichender Verfügbarkeit Ressourcen zur Übermittlung des jeweiligen Datenstroms über die Switches 101-103 und konfiguriert die Switches 101-103 jeweils dafür, die zweiten Datenströme zumindest temporär als ausgewählte Datenströme zu behandeln. Zumindest temporär werden die den zweiten Datenströmen zugeordneten Datenrahmen in diesem Fall also als Best-effort Datenverkehr behandelt und dementsprechend in die Sende-Queues 113, 123 eingereiht.

Bei Verfügbarkeit ausreichender Ressourcen zur Übermittlung der ersten Datenströme über die die Switches 101-103 kann der zentrale Netzwerk-Controller 400 vorteilhafterweise nachfolgend überprüfen, ob zur Übermittlung der zweiten Datenströme ausreichende Ressourcen verfügbar sind. Dementsprechend werden die Switches 101-103 jeweils dafür konfiguriert, die den zweiten Datenströmen zugeordnete Datagramme in die für die zweiten Datenströme reservierten Sende-Queues 112, 122 einzureihen.

Entsprechend einer bevorzugten Ausführungsvariante konfiguriert der zentrale Netzwerk-Controller 400 die Switches 101-103 bei Verfügbarkeit ausreichender Ressourcen jeweils dafür, dass die Datenströme jeweils einem virtuellen lokalen Netz (VLAN) zugeordnet und Datenströmen zugeordnete Datagramme auf Basis dieser Zuordnung jeweils in die jeweilige für Datenströme reservierte Sende-Queues 111-112, 121-122 eingereiht werden. Darüber hinaus konfiguriert der zentrale Netzwerk-Controller 400 die Switches 101-103 in dieser Ausführungsvariante bei mangelnder oder unsicherer Verfügbarkeit ausreichender Ressourcen jeweils zumindest temporär dafür, dass ausgewählte Datenströme jeweils einem virtuellen lokalen Netz zugeordnet werden, anhand dessen Zuordnung dem jeweiligen ausgewählten Datenstrom zugeordnete Datagramme jeweils in die jeweilige Sende-Queue für Datenverkehr eingereiht werden, der ohne spezifische Dienstgüte-Zusicherung bzw. als Best-effort Datenverkehr behandelt wird.

Vorteilhafterweise kann durch die Zuordnung des virtuellen lokalen Netzes einfach und zuverlässig geändert werden, ob bzw. mit welcher Priorität einem Datenstrom zugeordnete Datagramme jeweils in eine für Datenströme reservierte Sende-Queue eingereiht werden. Der zentrale Netzwerk-Controller 400 sendet hierzu Nachrichten 404 mit aktualisierten Konfigurationsdaten an jeweils von einer solchen Änderung betroffene Switches 101-103. Mittels der Nachrichten 403, 404 mit den Konfigurationsdaten bzw. aktualisierten Konfigurationsdaten konfiguriert der zentrale Netzwerk-Controller 400 die Switches 101-103 jeweils durch Einträge in eine jeweilige Forwarding Database (FDB) dafür, welches virtuelle lokale Netz einem Datenstrom jeweils zugeordnet wird bzw. ob bzw. mit welcher Priorität einem Datenstrom zugeordnete Datagramme jeweils in eine für Datenströme reservierte Sende-Queue eingereiht werden. Für eine Sende-Queue-Zuordnung ihrer Datenrahmen 300 werden die Datenströme vorzugsweise jeweils durch ihren Datenstrom-Identifikator und ihre Zuordnung zu einem virtuellen lokalen Netz identifiziert, insbesondere entsprechend IEEE 802.1 CB.

Der zentrale Netzwerk-Controller 400 kann beispielsweise während eines laufenden Betriebs des Kommunikationssystems zeit-bzw. ereignisgesteuert eine aktualisierte Priorisierung sämtlicher Datenströme erstellen und anhand der aktualisierten Priorisierung sowie auf Basis aktuell verfügbarer Ressourcen ermitteln, welche Datenströme zumindest temporär als ausgewählte Datenströme bzw. als Best-effort Datenverkehr zu behandeln sind. Insbesondere kann der zentrale Netzwerk-Controller 400 die Switches 101-103 während eines Betriebsstarts des Kommunikationssystems jeweils dafür konfigurieren, dass zunächst sämtliche Datenströme jeweils einem virtuellen lokalen Netz zugeordnet werden, anhand dessen Zuordnung dem jeweiligen ausgewählten Datenstrom zugeordnete Datenrahmen 300 jeweils in die jeweilige Sende-Queue 113, 123 für Best-effort Datenverkehr eingereiht werden. Nach dem Betriebsstart erstellt der zentrale Netzwerk-Controller 400 eine Priorisierung sämtlicher Datenströme und ermittelt anhand der Priorisierung sowie auf Basis verfügbarer Ressourcen, welche Datenströme zumindest temporär als Best-effort Datenverkehr zu behandeln sind.

## Patentansprüche

1. Verfahren zur Übermittlung zeitkritischer Daten innerhalb eines Kommunikationssystems, bei dem
- ausgewählte Datagramme (300) Datenströmen zugeordnet und von ersten Kommunikationsgeräten (201) zu zweiten Kommunikationsgeräten (202) über dritte Kommunikationsgeräte (101-103) umfassende Pfade übermittelt werden,
- die ersten Kommunikationsgeräte zur Bekanntmachung abonnierbarer Datenströme jeweils einen Datenstrom-Identifikator umfassende erste Datagramme (301) senden und in den ersten Datagrammen Dienstgüteparameter für den jeweiligen Datenstrom spezifizieren,
- die zweiten Kommunikationsgeräte zur Reservierung von durch die dritten Kommunikationsgeräte für eine Übermittlung der Datenströme bereitzustellenden Ressourcen jeweils zweite Datagramme (302) senden und in diesen den jeweiligen Datenstrom-Identifikator spezifizieren,
- eine übergeordnete Kommunikationssteuerungseinrichtung (400) auf die ersten und zweiten Datagramme jeweils einen Pfad für den jeweiligen Datenstrom ermittelt und bei ausreichender Verfügbarkeit Ressourcen zur Übermittlung des jeweiligen Datenstroms über die dritten Kommunikationsgeräte reserviert,
- die übergeordnete Kommunikationssteuerungseinrichtung (400) bei Verfügbarkeit ausreichender Ressourcen zumindest mit einem ersten oder zweiten Kommunikationsgerät verbundene dritte Kommunikationsgeräte (101, 102) jeweils dafür konfiguriert, dass Datenströmen zugeordnete Datagramme jeweils in für Datenströme reservierte Sende-Queues (111-112, 121-122) eingereiht werden,
- die Datenströme für eine Sende-Queue-Zuordnung ihrer Datagramme (300) jeweils durch ihren Datenstrom-Identifikator und ihre Zuordnung zu einem virtuellen lokalen Netz identifiziert werden,
- die übergeordnete Kommunikationssteuerungseinrichtung (400) bei mangelnder oder unsicherer Verfügbarkeit ausreichender Ressourcen zumindest die mit einem ersten oder zweiten Kommunikationsgerät verbundenen dritten Kommunikationsgeräte jeweils zumindest temporär dafür konfiguriert, dass ausgewählten Datenströmen zugeordnete Datagramme jeweils in eine Sende-Queue (113, 123) für Datenverkehr eingereiht werden, der ohne spezifische Dienstgüte-Zusicherung behandelt wird.

2. Verfahren nach Anspruch 1,
bei dem die übergeordnete Kommunikationssteuerungseinrichtung (400) bei Verfügbarkeit ausreichender Ressourcen zumindest mit einem ersten oder zweiten Kommunikationsgerät (201, 202) verbundene dritte Kommunikationsgeräte (101, 102) jeweils dafür konfiguriert, dass die Datenströme jeweils einem virtuellen lokalen Netz zugeordnet und Datenströmen zugeordnete Datagramme (300) auf Basis dieser Zuordnung jeweils in die jeweilige für Datenströme reservierte Sende-Queues (111-112, 121-122) eingereiht werden, und bei dem die übergeordnete Kommunikationssteuerungseinrichtung (400) bei mangelnder oder unsicherer Verfügbarkeit ausreichender Ressourcen zumindest die mit einem ersten oder zweiten Kommunikationsgerät verbundenen dritten Kommunikationsgeräte jeweils zumindest temporär dafür konfiguriert, dass ausgewählte Datenströme jeweils einem virtuellen lokalen Netz zugeordnet werden, anhand dessen Zuordnung dem jeweiligen ausgewählten Datenstrom zugeordnete Datagramme jeweils in die jeweilige Sende-Queue (113, 123) für Datenverkehr eingereiht werden, der ohne spezifische Dienstgüte-Zusicherung behandelt wird.

3. Verfahren nach Anspruch 2,
bei dem durch die Zuordnung des virtuellen lokalen Netzes geändert wird, ob und/oder mit welcher Priorität einem Datenstrom zugeordnete Datagramme jeweils in eine für Datenströme reservierte Sende-Queue eingereiht werden.

4. Verfahren nach einem der Ansprüche 2 oder 3,
bei dem die übergeordnete Kommunikationssteuerungseinrichtung (400) während eines laufenden Betriebs des Kommunikationssystems zeit- und/oder ereignisgesteuert eine aktualisierte Priorisierung sämtlicher Datenströme erstellt und anhand der aktualisierten Priorisierung sowie auf Basis aktuell verfügbarer Ressourcen ermittelt, welche Datenströme zumindest temporär als ausgewählte Datenströme zu behandeln sind.

5. Verfahren nach einem der Ansprüche 2 bis 4,
bei dem die übergeordnete Kommunikationssteuerungseinrichtung (400) zumindest die mit einem ersten oder zweiten Kommunikationsgerät (201, 202) verbundenen dritten Kommunikationsgeräte (101, 102) während eines Betriebsstarts des Kommunikationssystems jeweils dafür konfiguriert, dass zunächst sämtliche Datenströme jeweils einem virtuellen lokalen Netz zugeordnet werden, anhand dessen Zuordnung dem jeweiligen ausgewählten Datenstrom zugeordnete Datagramme jeweils in die jeweilige Sende-Queue (113, 123) für Datenverkehr eingereiht werden, der ohne spezifische Dienstgüte-Zusicherung behandelt wird.

6. Verfahren nach Anspruch 5,
bei dem die übergeordnete Kommunikationssteuerungseinrichtung (400) nach dem Betriebsstart eine Priorisierung sämtlicher Datenströme erstellt und anhand der Priorisierung sowie auf Basis verfügbarer Ressourcen ermittelt, welche Datenströme zumindest temporär als ausgewählte Datenströme zu behandeln sind.

7. Verfahren nach einem der Ansprüche 1 bis 6,
bei dem die Datenstrom-Identifikatoren jeweils auf eine Reservierungsanfrage (401) eines ersten Kommunikationsgeräts (201) durch die übergeordnete Kommunikationssteuerungseinrichtung (400) an das jeweilige erste Kommunikationsgerät bereitgestellt werden.

8. Verfahren nach einem der Ansprüche 1 bis 7,
bei dem die übergeordnete Kommunikationssteuerungseinrichtung (400) zumindest die mit einem ersten oder zweiten Kommunikationsgerät (201, 202) verbundenen dritten Kommunikationsgeräte (101, 102) jeweils durch Einträge in eine jeweilige Forwarding Database dafür konfiguriert, welches virtuelle lokale Netz einem Datenstrom jeweils zugeordnet wird und/oder ob und/oder mit welcher Priorität einem Datenstrom zugeordnete Datagramme jeweils in eine für Datenströme reservierte Sende-Queue eingereiht werden.

9. Verfahren nach einem der Ansprüche 1 bis 8,
bei dem die durch insbesondere die dritten Kommunikationsgeräte (101-103) bereitzustellenden Ressourcen nutzbare Übertragungszeitfenster, Bandbreite, zugesicherte maximale Latenz, Queue-Anzahl, Queue-Cache und/oder Adress-Cache in Switches oder Bridges umfassen.

10. Verfahren nach einem der Ansprüche 1 bis 9,
bei dem die Kommunikationsgeräte (101-103, 201-202) über ein Time-sensitive Network, insbesondere entsprechend IEEE802.3-2018, IEEE 802.1Q-2018, IEEE 802.1AB-2016, IEEE 802.1AS-2011, IEEE 802.1BA-2011 und/oder IEEE 802.1CB-2017, miteinander verbunden sind.

11. Verfahren nach Anspruch 10,
bei dem eine Weiterleitung der ausgewählten Datagramme (300) mittels Frame Preemption, insbesondere gemäß IEEE 802.1Q-2018, Time-Aware Shaper, insbesondere gemäß IEEE 802.1Q-2018, Credit-Based Shaper, insbesondere gemäß IEEE 802.1Q-2018, Burst Limiting Shaper, Peristaltic Shaper und/oder Priority-Based Shaper gesteuert wird.

12. Verfahren nach einem der Ansprüche 9 oder 10,
bei dem in den dritten Kommunikationsgeräten (101-103) jeweils zumindest für erste Datenströme mit erhöhten Echtzeitanforderungen reservierte Sende-Queues (111, 121), für zweite Datenströme ohne erhöhte Echtzeitanforderungen reservierte Sende-Queues (112, 122) und Sende-Queues (113, 123) für Datenverkehr ohne spezifische Dienstgüte-Zusicherung, insbesondere Best-effort Datenverkehr, vorgesehen sind, bei dem die übergeordnete Kommunikationssteuerungseinrichtung (400) zunächst nur für die ersten Datenströme bei ausreichender Verfügbarkeit Ressourcen zur Übermittlung des jeweiligen Datenstroms über die dritten Kommunikationsgeräte reserviert und die dritten Kommunikationsgeräte jeweils dafür konfiguriert, die zweiten Datenströme zumindest temporär als ausgewählte Datenströme zu behandeln.

13. Verfahren nach Anspruch 12,
bei dem die übergeordnete Kommunikationssteuerungseinrichtung (400) bei Verfügbarkeit ausreichender Ressourcen zur Übermittlung der ersten Datenströme über die dritten Kommunikationsgeräte (101-103) überprüft, ob zur Übermittlung der zweiten Datenströme ausreichende Ressourcen verfügbar sind, und die dritten Kommunikationsgeräte jeweils dementsprechend dafür konfiguriert, die den zweiten Datenströmen zugeordnete Datagramme in die für die zweiten Datenströme reservierten Sende-Queues (112, 122) einzureihen.

14. Kommunikationssteuerungseinrichtung mit
- zumindest einem Anschluss zur Verbindung mit einem Datagramme weiterleitenden Kommunikationsgerät,
- wobei die Kommunikationssteuerungseinrichtung (400) dafür ausgestaltet und eingerichtet ist, auf durch erste Kommunikationsgeräte (201) gesendete erste Datagramme (301) zur Bekanntmachung abonnierbarer Datenströme und auf durch zweite Kommunikationsgeräte (201) gesendete zweite Datagramme (302) zur Reservierung von durch dritte Kommunikationsgeräte (101-103) für eine Übermittlung der Datenströme bereitzustellenden Ressourcen jeweils einen Pfad für den jeweiligen Datenstrom zu ermitteln und bei ausreichender Verfügbarkeit Ressourcen zur Übermittlung des jeweiligen Datenstroms über die dritten Kommunikationsgeräte zu reservieren,
- wobei die Kommunikationssteuerungseinrichtung ferner dafür ausgestaltet und eingerichtet ist, bei Verfügbarkeit ausreichender Ressourcen zumindest mit einem ersten oder zweiten Kommunikationsgerät (201, 202) verbundene dritte Kommunikationsgeräte (101, 102) jeweils dafür zu konfigurieren, dass Datenströmen zugeordnete Datagramme (300) jeweils in für Datenströme reservierte Sende-Queues (111-112, 121-122) eingereiht werden,
- wobei die Kommunikationssteuerungseinrichtung ferner dafür ausgestaltet und eingerichtet ist, die dritten Kommunikationsgeräte (101-103) zu konfigurieren, dass die Datenströme für eine Sende-Queue-Zuordnung ihrer Datagramme (300) jeweils durch ihren Datenstrom-Identifikator und ihre Zuordnung zu einem virtuellen lokalen Netz identifiziert werden,
- wobei die Kommunikationssteuerungseinrichtung ferner dafür ausgestaltet und eingerichtet ist, bei mangelnder oder unsicherer Verfügbarkeit ausreichender Ressourcen zumindest die mit einem ersten oder zweiten Kommunikationsgerät verbundenen dritten Kommunikationsgeräte jeweils zumindest temporär dafür zu konfigurieren, dass ausgewählten Datenströmen zugeordnete Datagramme jeweils in eine Sende-Queue (113, 123) für Datenverkehr eingereiht werden, der ohne spezifische Dienstgüte-Zusicherung behandelt wird.

## Claims

1. Method for the transmission of time-critical data within a communication system, in which
- selected datagrams (300) are assigned to data streams and are transmitted from first communication devices (201) to second communication devices (202) via third communication devices (101-103) comprising paths,
- the first communication devices send first datagrams (301) comprising a data stream identifier in each case for notification of subscribable data streams and specify quality-of-service parameters in the first datagrams for the respective data stream,
- the second communication devices send, in each case, second datagrams (302) for reserving resources to be provided by the third communication devices for a transmission of the data streams and specify in these the respective data stream identifier,
- a higher-level communication control facility (400) determines a path on the first and second datagrams in each case for the respective data stream and, if sufficient resources are available, reserves resources for the transmission of the respective data stream via the third communication devices,
- if sufficient resources are available, the higher-level communication control facility (400) configures at least third communication devices (101, 102) connected to a first or second communication device, in each case, such that datagrams assigned to data streams are placed in send queues (111-112, 121-122) reserved for data streams,
- the data streams are identified in each case for a send queue assignment of their datagrams (300) by their data stream identifier and their assignment to a virtual local network,
- if there is a lack or uncertainty of availability of sufficient resources, the higher-level communication control facility (400) at least temporarily configures at least the third communication devices connected to a first or second communication device in each case, such that datagrams assigned to selected data streams are placed in a send queue (113, 123) for data traffic in each case, which data traffic is not covered by specific quality of service assurance.

2. Method according to claim 1,
in which, if sufficient resources are available, the higher-level communication control facility (400) configures at least third communication devices (101, 102) connected to a first or second communication device (201, 202), in each case, such that the data streams are each assigned to a virtual local network and datagrams (300) assigned to data streams are placed in each case in the respective send queues (111-112, 121-122) reserved for data streams based on this assignment, and in which, if there is a lack or uncertainty of availability of sufficient resources, the higher-level communication control facility (400) at least temporarily configures at least the third communication devices connected to a first or second communication device, in each case, such that selected data streams are each assigned to a virtual local network, on the basis of which assignment datagrams assigned to the respective selected data stream are placed in the respective send queue (113, 123) for data traffic in each case, which data traffic is not covered by specific quality of service assurance.

3. Method according to claim 2,
in which the assignment of the virtual local network changes whether and/or with what priority datagrams assigned to a data stream are each placed in a send queue reserved for data streams.

4. Method according to one of claims 2 or 3,
in which, during ongoing operation of the communication system on a time- and/or event-driven basis, the higher-level communication control facility (400) creates an updated prioritisation of all data streams and determines which data streams are to be treated, at least temporarily, as selected data streams on the basis of the updated prioritisation and on the basis of currently available resources.

5. Method according to one of claims 2 to 4,
in which the higher-level communication control facility (400) configures at least the third communication devices (101, 102) connected to a first or second communication device (201, 202), in each case, during a start of operation of the communication system, such that all data streams are each first assigned to a virtual local network, on the basis of which assignment datagrams assigned to the respective selected data stream are placed in the respective send queue (113, 123) for data traffic in each case, which data traffic is not covered by specific quality of service assurance.

6. Method according to claim 5,
in which, after the start of operation, the higher-level communication control facility (400) creates a prioritisation of all data streams and determines which data streams are to be treated, at least temporarily, as selected data streams on the basis of the prioritisation and on the basis of available resources.

7. Method according to one of claims 1 to 6,
in which the data stream identifiers are provided, in response to a reservation request (401) of a first communication device (201), by the higher-level communication control facility (400), to the respective first communication device.

8. Method according to one of claims 1 to 7,
in which the higher-level communication control facility (400) configures at least the third communication devices (101, 102) connected to a first or second communication device (201, 202), in each case, by way of entries in a respective forwarding database, as to which virtual local network is assigned to a data stream in each case and/or whether and/or with what priority datagrams assigned to a data stream are each placed in a send queue reserved for data streams.

9. Method according to one of claims 1 to 8,
in which the resources to be provided by the third communication devices (101-103) in particular comprise usable transfer time windows, bandwidth, assured maximum latency, queue count, queue cache and/or address cache in switches or bridges.

10. Method according to one of claims 1 to 9,
in which the communication devices (101-103, 201-202) are interconnected via a time-sensitive network, in particular according to IEEE802.3-2018, IEEE 802.1Q-2018, IEEE 802.1AB-2016, IEEE 802.1AS-2011, IEEE 802.1BA-2011 and/or IEEE 802.1CB-2017.

11. Method according to claim 10,
in which a forwarding of the selected datagrams (300) is controlled by means of frame preemption, in particular in accordance with IEEE 802.1Q-2018, by means of time-aware shapers, in particular in accordance with IEEE 802.1Q-2018, by means of credit-based shapers, in particular in accordance with IEEE 802.1Q-2018, by means of burst limiting shapers, by means of peristaltic shapers and/or by means of priority-based shapers.

12. Method according to one of claims 9 or 10,
in which, in each case, in the third communication devices (101-103), send queues (111, 121) reserved at least for first data streams with increased real-time requirements, send queues (112, 122) reserved for second data streams without increased real-time requirements and send queues (113, 123) for data traffic without specific quality of service assurance, in particular best effort data traffic, are provided, in which, where there is sufficient availability, the higher-level communication control facility (400) only then reserves resources for transmission of the respective data stream for the first data streams via the third communication devices and configures the third communication devices in each case to treat the second data streams at least temporarily as selected data streams.

13. Method according to claim 12,
in which, if sufficient resources are available for transmitting the first data streams via the third communication devices (101-103), the higher-level communication control facility (400) checks whether sufficient resources are available for transmitting the second data streams, and accordingly configures the third communication devices in each case to place the datagrams assigned to the second data streams into the send queues (112, 122) reserved for the second data streams.

14. Communication control facility with
- at least one connection for connecting to a communication device forwarding datagrams,
- wherein the communication control facility (400) is embodied and designed to determine a path in each case for the respective data stream on first datagrams (301) sent by first communication devices (201) for notification of subscribable data streams, and on second datagrams (302) sent by second communication devices (201) for reserving resources to be provided by third communication devices (101-103) for a transmission of the data streams and if there is sufficient availability, to reserve resources for the transmission of the respective data stream via the third communication devices,
- wherein, if sufficient resources are available, the communication control facility is further embodied and designed to configure at least third communication devices (101, 102) connected to a first or second communication device (201, 202), in each case, such that datagrams (300) assigned to data streams are each placed in send queues (111-112, 121-122) reserved for data streams,
- wherein the communication control facility is further embodied and designed to configure the third communication devices (101-103) such that the data streams are identified in each case for a send queue assignment of their datagrams (300) by their data stream identifier and their assignment to a virtual local network,
- wherein, if there is a lack or uncertainty of availability of sufficient resources or if the resources are insecure, the communication control facility is further embodied and designed to at least temporarily configure, in each case, at least the third communication devices connected to a first or second communication device, such that datagrams assigned to selected data streams are each placed in a send queue (113, 123) for data traffic, which data traffic is not covered by specific quality of service assurance.

## Revendications

1. Procédé de transmission de données critiques du point de vue du temps dans un système de communication, dans lequel
- on affecte des datagrammes (300) sélectionnés à des flux de données et on les transmet de premiers appareils (201) de communication à des deuxièmes appareils (202) de communication en passant par des chemins comprenant des troisièmes appareils (101-103) de communication,
- les premiers appareils de communication envoient, pour la notification de flux de données pouvant être abonnés, respectivement des premiers datagrammes (301) comprenant un identifiant de flux de données et précisent dans les premiers datagrammes des paramètres de qualité de service pour le flux de données respectif,
- les deuxièmes appareils de communication envoient, pour la réservation de ressources à mettre à disposition par les troisièmes appareils de communication pour une transmission des flux de données, respectivement des deuxièmes datagrammes (302) et précisent dans ceux-ci l'identifiant de flux de données respectif,
- un dispositif (400) de commande de communication supérieur hiérarchiquement détermine sur les premiers et deuxièmes datagrammes respectivement un chemin pour le flux de données respectif et, si la disponibilité est suffisante, réserve des ressources pour la transmission du flux de données respectif en passant par les troisièmes appareils de communication,
- le dispositif (400) de commande de communication supérieur hiérarchiquement configure, s'il y a la disponibilité de ressources suffisante au moins par des troisièmes appareils (101, 102) de communication, reliés au premier ou au premier appareil de communication, respectivement que des datagrammes associés au flux de données peuvent être insérés respectivement dans des queues (111-112, 121-122) d'émission réservées pour des flux de données,
- on identifie les flux de données pour une association émission-queue de leurs datagrammes (300) respectivement par leur identifiant de flux de données et leur affectation à un réseau local virtuel,
- le dispositif (400) de commande de communication supérieur hiérarchiquement si la disponibilité de ressources suffisantes fait défaut ou n'est pas sûre, configure respectivement au moins temporairement au moins les troisièmes appareils de communication, reliés à un premier ou à un deuxième appareil de communication, de manière à ranger pour le trafic de données dans une queue d'émission (113-123) des datagrammes affectés à des flux de données sélectionnés, trafic de données que l'on traite sans garantie spécifique de qualité du service.

2. Procédé suivant la revendication 1,
dans lequel le dispositif (400) de commande de communication supérieur hiérarchiquement, s'il y a disponibilité de ressources suffisantes, configure au moins respectivement des troisièmes appareils (101, 102) de communication, reliés au moins à un premier ou à un deuxième appareil (201, 202) de communication, de manière à ce que les flux de données soient associés respectivement à un réseau local virtuel et de manière à ce que des datagrammes (300) affectés à des flux de données soient, sur la base de cette affectation, rangés respectivement dans les queues (111-112, 121-122) d'émission respectives réservées à des flux de données, et dans lequel le dispositif (400) de commande de communication supérieur hiérarchiquement, si la disponibilité de ressources suffisantes est manquante ou n'est pas sûre, configure au moins temporairement respectivement les troisièmes appareils de communication, reliés à un premier ou à un deuxième appareil de communication, de manière à ce que des flux de données sélectionnés soient affectés respectivement à un réseau local virtuel, à l'aide de l'association duquel des datagrammes, affectés au flux de données sélectionné respectivement, sont rangés respectivement dans la queue (113, 123) d'émission respective pour le trafic de données, que l'on traite sans assurance spécifique de qualité du service.

3. Procédé suivant la revendication 2,
dans lequel on modifie, par l'association du réseau local virtuel, si et/ou avec quelle priorité des datagrammes affectés à un flux de données sont rangés respectivement dans une queue d'émission réservée à des flux de données.

4. Procédé suivant l'une des revendications 2 ou 3,
dans lequel le dispositif (400) de commande de communication supérieur hiérarchiquement établit pendant un fonctionnement en cours du système de communication, de manière commandée en fonction du temps et/ou des évènements, une priorisation mise à jour de l'ensemble des flux de données et, à l'aide de la priorisation mise à jour ainsi que sur la base de ressources disponibles en cours, détermine les flux de données à traiter au moins temporairement comme flux de données sélectionnés.

5. Procédé suivant l'une des revendications 2 à 4,
le dispositif (400) de commande de communication supérieur hiérarchiquement configure respectivement, pendant un type de fonctionnement du système de communication, au moins les troisièmes appareils (101, 102) de communication, reliés à un premier ou à un deuxième appareil (201, 202) de communication, de manière à affecter d'abord l'ensemble des flux de données respectivement à un réseau local virtuel, à l'aide de l'affectation duquel des datagrammes affectés au flux de données sélectionné respectif sont rangés respectivement dans la queue (113, 123) d'émission respective pour un trafic de données, que l'on traite sans garantie spécifique de qualité du service.

6. Procédé suivant la revendication 5,
dans lequel le dispositif (400) de commande de communication supérieur hiérarchiquement établit, suivant le type de fonctionnement, une priorisation de l'ensemble des flux de données et détermine, à l'aide de la priorisation ainsi que sur la base des ressources disponibles, les flux de données à traiter au moins temporairement comme flux de données sélectionnés.

7. Procédé suivant l'une des revendications 1 à 6,
dans lequel des identifiants de flux de données sont respectivement, sur une demande (401) de réservation d'un premier appareil (201) de communication, mis à disposition du premier appareil de communication respectif par le dispositif (400) de commande de communication supérieur hiérarchiquement.

8. Procédé suivant l'une des revendications 1 à 7,
dans lequel le dispositif (400) de commande de communication supérieur hiérarchiquement configure au moins les troisièmes appareils (101, 102) de communication, reliés à un premier ou à un deuxième appareil (201, 202) de communication, respectivement par inscription dans une base de données respective forwarding, le réseau local virtuel à affecter respectivement à un flux de données et/ou si et/ou avec quelle priorité, des datagrammes associés à un flux de données sont rangés respectivement dans une queue d'émission réservée pour des flux de données.

9. Procédé suivant l'une des revendications 1 à 8,
dans lequel les ressources à mettre à disposition, en particulier par les troisièmes appareils (101-103) de communication comprennent des fenêtres de temps de transmission utilisables, des largeurs de bande, une latence maximum garantie, un numéro de queue, un cache queue et/ou un cache d'adresse dans des switches ou des bridges.

10. Procédé suivant l'une des revendications 1 à 9,
dans lequel les appareils (101-103, 201-202) de communication sont reliés entre eux par un réseau time-sensitive, en particulier conformément à IEEE802.3-2018, IEEE 802.1Q-2018, IEEE 802.1AB-2016, IEEE 802.1AS-2011, IEEE 802.1BA-2011 et/ou IEEE 802.1CB-2017.

11. Procédé suivant la revendication 10,
dans lequel on commande un acheminement des datagrammes (300) sélectionnés au moyen d'une frame preemption, en particulier suivant IEEE 802.1Q-2018 d'un time-aware shaper, en particulier suivant IEEE 802.1Q-2018 d'un crédit de base shaper, en particulier suivant IEEE 802.1Q-2018, d'un burst limiting shaper, d'un peristaltic shaper et/ou d'un priority base shaper.

12. Procédé suivant l'une des revendications 9 ou 10,
dans lequel, dans les troisièmes appareils (101-103) de communication, on prévoit respectivement des queues (111, 121) d'émission réservées au moins à des premiers flux de données ayant de grandes exigences en temps réel, des queues (112, 122) d'émission réservées à des flux de données sans grandes exigences en temps réel et des queues (113, 123) d'émission pour un trafic de données sans garantie de qualité de service spécifique, en particulier un trafic de données best-effort, dans lequel le dispositif (400) de commande de communication supérieur hiérarchiquement réserve d'abord seulement pour les premiers flux de données, s'il y a une disponibilité suffisante de ressources pour la transmission du flux de données respectif en passant par les troisièmes appareils de communication, et configure les troisièmes appareils de communications respectivement, de manière à traiter les deuxièmes flux de données au moins temporairement comme flux de données sélectionnés.

13. Procédé suivant la revendication 12,
dans lequel le dispositif (400) de commande de communication supérieur hiérarchiquement, s'il y a disponibilité de ressources suffisantes pour la transmission des premiers flux de données en passant par les troisièmes appareils (101-103) de communication, contrôle si des ressources suffisantes sont disponibles pour la transmission des deuxièmes flux de données, et configure les troisièmes appareils de communication respectivement en conséquence, de manière à ranger les datagrammes affectés aux deuxièmes flux de données dans les queues (112, 122) d'émission réservées aux deuxièmes flux de données.

14. Dispositif de commande de communication comprenant
- au moins une connexion de liaison à un appareil de communication acheminant des datagrammes,
- dans lequel le dispositif (400) de commande de communication est conformé et agencé pour déterminer respectivement un chemin pour le flux de données respectif sur des premiers datagrammes (301), envoyés par des premiers appareils (201) de communication, pour la signification de flux de données pouvant être abonnés et sur des deuxièmes datagrammes (302), envoyés par des deuxièmes appareils (201) de communication, pour la réservation de ressources à mettre à disposition pour une transmission des flux de données par des troisièmes appareils (101-103) de communication et, si la disponibilité est suffisante, pour réserver des ressources pour la transmission du flux respectif de données par les troisièmes appareils de communication,
- dans lequel le dispositif de commande de communication est conformé et agencé en outre pour, s'il y a disponibilité de ressources suffisantes, configurer respectivement au moins des troisièmes appareils (101, 102) de communication, reliés à un premier ou à un deuxième appareil (201, 202) de communication, de manière à ranger des datagrammes (300) de données, affectés à des flux de données, respectivement dans des queues (111-112, 121-122) d'émission réservées à des flux de données,
- dans lequel le dispositif de commande de communication est conformé et agencé en outre pour configurer les troisièmes appareils (101-103) de communication, de manière à identifier les flux de donnés pour une affectation d'une queue d'émission de leurs datagrammes (300) respectivement par leur identifiant de flux de données et leur affectation à un réseau local virtuel,
- dans lequel le dispositif de commande de communication est conformé et agencé pour, si la disponibilité en ressources suffisantes est manquante ou peu sûre, configurer au moins les troisièmes appareils de communication, reliés à un premier ou à un deuxième appareil de communication, respectivement au moins temporairement, de manière à ranger des datagrammes affectés à des flux de données sélectionnées respectivement dans une queue (113, 123) d'émission pour un trafic de données, que l'on traite sans garantie spécifique de qualité de service.
